(19) Europäisches Patentamt
European Patent Office
Office européen des brevets

(11) Veröffentlichungsnummer: **0 103 276**
**B1**

(12) # EUROPÄISCHE PATENTSCHRIFT

(45) Veröffentlichungstag der Patentschrift: **17.12.86**

(51) Int. Cl.[4]: **C 08 G 65/46**

(21) Anmeldenummer: **83108869.5**

(22) Anmeldetag: **08.09.83**

(54) **Verfahren zur Stabilisierung von Polyphenylenetherlösungen.**

(30) Priorität: **14.09.82 DE 3234034**

(43) Veröffentlichungstag der Anmeldung: **21.03.84 Patentblatt 84/12**

(45) Bekanntmachung des Hinweises auf die Patenterteilung: **17.12.86 Patentblatt 86/51**

(84) Benannte Vertragsstaaten: **BE DE FR GB NL**

(56) Entgegenhaltungen:
**EP-A-0 051 743**
**EP-A-0 051 788**
**EP-A-0 081 708**
**DE-A-2 754 887**
**DE-A-2 755 937**
**DE-A-2 909 108**

(73) Patentinhaber: **BASF Aktiengesellschaft, Carl-Bosch- Strasse 38, D-6700 Ludwigshafen (DE)**

(72) Erfinder: **Hambrecht, Juergen, Dr., Werderstrasse 30, D-6900 Heidelberg (DE)**
Erfinder: **Reffert, Rudi Wilhelm, Berliner Strasse 18, D-6711 Beindersheim (DE)**
Erfinder: **Echte, Adolf, Dr., Leuschnerstrasse 42, D-6700 Ludwigshafen (DE)**
Erfinder: **Swoboda, Johann, Dr., Neuwiesenstrasse 28, D-6700 Ludwigshafen (DE)**

**EP 0 103 276 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative-Kupplungsreaktion mit Sauerstoff bei Temperaturen zwischen 15 und 50°C in Anwesenheit eines Katalysatorkomplexes aus einem Kupfersalz und einem organischen Amin in Gegenwart eines Lsungsmittels im Bereich von 1:1 bis 20:1 Gewichtsteilen, bezogen auf das monomere Phenol, und gegebenenfalls eines Aktivators und anschließendes Abstoppen der Reaktion und Entfernen der Metallkomponente des Katalysators durch Zugabe chelat- und/oder salzbildender Mittel.

Polyphenylenether und Verfahren zu ihrer Herstellung sind allgemein bekannt und vielfachen beschrieben, wie beispielsweise in den US-Patentschriften 3 306 874, 3 306 875, 3 639 656, 3 642 699 und 3 661 848, deren Offenbarungsgehalt in die vorliegende Anmeldung aufgenommen wird.

Die zur Herstellung der Polyphenylenether am hufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Cu-Amin-Komplexe eingesetzt. Als Lsungsmittel werden vorzugsweisw aromatische Kohlenwasserstaffe verwendet. Die Reaktion wird gewhnlich durch Entfernen des Katalysators aus der Reaktionsmischung beendet. Dies geschieht durch die Verwendung von wäßrigen Lösungen von anorganischen oder organischen Säuren, wie es z. B. in der DE–A–21 05 372 im Gegenstromextraktionsverfahren vorgenommen wird. Verwendet werden auch Polyaminocarbonsäuren (s. DE–A–23 64 319) oder andere Chelatisierungsmittel wie Nitrilotriessigsäure und ihre Natriumsalze oder Ethylendiamintetraessigsäure und ihre Natriumsalze (s. DE–A–25 32 477), letztere auch in Kombination mit quartären Ammoniumsalzen (s. US–A–4 026 870). Beschrieben wird auch die Katalysatorabtrennung mit Hilfe komplexbildender Mittel aus der Gruppe des Bisguanids (s. DE–A–24 60 325). Neben dem Abbrechen der oxidativen Selbstkondensation hat die Zugabe des komplexbildenden Agens auch die möglichst vollständige fernung des Katalysators aus dem Polyphenylenether zum Ziel, daß Verunreinigungen des Polymeren durch Metallreste zu einer Verschlechterung des gesamten Eigenschaftsbildes des Polymeren führen. In der Regel muß neben der Description fernung des Katalysatorsystems eine zusätzliche Maßnahme ergriffen werden, um die Polyphenylenetherlösungen gegen einen Molekulargewichtsabbau zu stabilisieren. In der DE–A–26 16 746 ist deshalb vorgeschlagen worden, die Polymerlösungen mit Reduktionsmittel, wie z. B. Natriumdithionit oder Hydrazin zu behandeln und in der DE–A–27 55 937 ist ein Verfahren beschrieben, bei dem die Polymerlösungen durch Zugabe aromatischer Amine gegen Molekulargewichtsabbau stabilisiert werden. In den meisten Fällen reichen diese Maßnahmen jedoch nicht aus, um eine Stabilisierung über längere Zeiträume zu erzielen. In den DE–A– 24 30 130 und 27 54 887 wird deshalb die Zugabe von zweiwertigen Phenolen zusätzlich zu den üblichen Reduktionsmitteln beschrieben. Beispielsweise werden dort Kombinationen aus Natriumdithionit oder Natriumsulfit und Hydrochinon beschrieben. Es hat sich jedoch gezeigt, daß auch diese Maßnahme nicht ausreicht, um Polyphenylenoxidlösungen in einem Schritt über längere Zeit bei Temperaturen bis 200°C gegen einen Molekulargewichtsabbau zu schützen. Darüber hinaus ergaben sich Nachteile bezüglich der Eigenfarbe der Polyphenylenoxidlösungen und insbesondere bei der Abtrennung der wäßrigen Lösungen der Reduktionsmittel. Diese werden in der Regel zusammen mit den wäßrigen Lösungen der Katalysatorabtrennmittel von der organischen Lösung des Polyphenylenethers abgetrennt. Verwendet man nun die oben genannte Kombination aus Reduktionsmittel und zweiwertigem Phenol, so ergeben sich Probleme bei der Phasentrennung von organischer und wäßriger Phase und eine Folge davon ist, daß die Katalysatorabtennung mangelhaft wird.

Der Erfindung lag deshalb die Aufgabe zugrunde, ein einfaches und hochwirksames Verfahren zur Abtrennung der Katalysatorreste bei der Selbstkondensation einwertiger Phenole in Gegenwart von Sauerstoff unter gleichzeitiger Stabilisierung der resultierenden Polyphenylenetherlösung gegen Molekulargewichtsabbau zu entwickeln. Die Stabilisierung sollte dabei auch bei Temperaturen bis zu 200°C über längere Zeiträume, d.h. mehrere Tage, wirksam sein.

Diese Aufgabe wird durch ein Verfahren gemä Ansprüche 1 bis 4 gelöst.

Die Verbindung der allgemeinen Struktur (I) oder (II) wird zweckmäig in Mengen von 0,1 bis 100 mMol, bezogen auf ein Mol monomeres Phenol, und in Form von 1 bis 20 gew.%igen wäßrigen Lösungen eingesetzt.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemäßen Polymeren weisen Molekulargewichte von 10 000 bis 90 000, bevorzugt 20 000 bis 80 000, bestimmt nach der in "Macromolekular Synthesis" I (1978), Seite 83 angegebenen Methode, auf. Hochmolekulare Polyphenylenether, auch Polyphenylenoxide genannt, sind an sich aus der Literatur seit längerem bekannt (vgl. z. US–PS 3 661 848; US–PS 3 219 625 oder US–PS 3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach

einem bevorzugten Verfahren wird der Katalysator aus Kupfersalz, vorzugsweise Kupfer-1-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z. B. n-Dibutylamin, Diethylamin, Picolin, Chinolin, Pyridinbasen, Triisopropylamin, Dimethylisopropanolamin, Triethanolamin, Tiisopropanolamin oder Diisopropanolamin mit einem Kupfersalz wie Kupfer-I-bromid, Kupfer-I-chlorid, Kupfer-I-jodid, Kupfer-II-acetat, Kupfer-II-chlorid, Kupfer-II-propionat, Kupfer-II-acetessigester oder Kupfer-II-acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise in Bereich von 1: 1 bis 20: 1, d.h., maximal bis zu einem Überschuß des 20-fachen an Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US–PS 3 544 515).

Bei einem bevorzugten Verfahren wird die Polykondensationsreaktion bei Temperaturen zwischen 15 und 50, vorzugsweise 18 und 22°C durchgeführt. Hierzu wird der Sauerstoff in die 15 bis 50°C warme Lösung des Monomeren in Gegenwart des Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte. Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Mengen anderer Materialien. Diese Reaktionslösungen werden mit komplex- und/oder salzbildenden Mitteln zur Abtrennung des im Polymeren enthaltenen Metallkatalysators behandelt. Die Art und Weise der Zugabe der metallbindenden Extraktionsmittel ist dabei unkritisch. So können diese Extraktionsmittel in Substanz ebenso wie in wäßriger Lösung und in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Separierung der Metallkomponente kann dabei in geeigneten Verfahrensvorrichtungen wie z. B. in Dekantationstanks, Zentrifugen und ähnlichem vorgenommen werden.

Die Kontaktzeit des komplex- und salzbildenden Agens mit der katalysatorhaltigen Polyphenylenether-Phase kann innerhalb weiter Grenzen variieren. Bevorzugt werden Reaktionszeiten von 1 Minute bis 5 Stunden. Häufig genügen Reaktionszeiten von 5 bis 60 Minuten. Die bevorzugte Reaktionstemperatur liegt zwischen 25 und 90°C, es sind jedoch auch Temperaturbereiche darunter und darüber anwendbar.

Bevorzugt eingesetzt werden als komplex- und salzbildendes Agens Verbindungen, die aus der Gruppe der Polyalkylenpolyamine, Polycarbonsäuren, polymere Polycarbonsäuren, Aminopolycarbonsäuren, Aminocarbonsäuren, Aminophosphonsäuren ausgewählt sind. Besonders bevorzugt sind Aminopolycarbon säuren und ihre Alkali- und/oder Erdalkalisalze, wie Ethylendiamintetraessigsäure, Nitrilotriessigsäure und ihre Mono-, Di- und Trinatriumsalze, Zitronensäure, Glycin, Diglykolsäure, Polyacrylsäure, Polyethylenmaleinsäure, Aminotri(methylenphosphensäure),Hydroxyethandiphosphonsäure,Hydroxyethyliminodiessigsäure.

Die komplex- und salzbildenden Mittel werden in solchen Mengen eigesetzt, daß mindestens 1 Mol Carbonsäure- und/oder Phosphonsäuregruppe auf 1 Mol des zu entfernenden Metallions entfällt. Im allgemeinen werden je Äquivalent Schwermetallion 1,2 bis 100 Äquivalente Carbonsäure- oder Phosphonsäuregruppen eingesetzt.

Die Abtrennung der Metallkatalysatoren bis zur vollständigen vollständigen Entfernung aus dem Polyphenylenether-Polymeren kann durch mehrfache Zugabe der Extraktionsmittel und anschließende Separierung der resultierenden Metallkomplexe und Metallsalze gemäß der bereits beschriebenen Verfahren erfolgen. Bevorzugt wird jedoch eine Ausführungsform der Erfindung, wonach die gesamte Katalysatormenge in einem Schritt aus dem Polymeren entfernt wird.

Nach der Entfernung der metallischen Komponente des Katalysatorkomplexes mit den oben beschriebenen Extraktionsmitteln oder direkt mit der Zugabe der komplex- und/oder salzbildenden Extraktionsmittel wird die organische Polyphenylenetherlösung gemäß dem erfindungsgemäßen Verfahren stabilisiert. Dies geschieht durch Zugabe ausreichender Mengen von Verbindungen der allgemeinen Struktur (I)

Tetrondiole

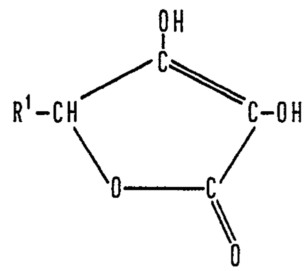 (I)

oder

Pyrondiole

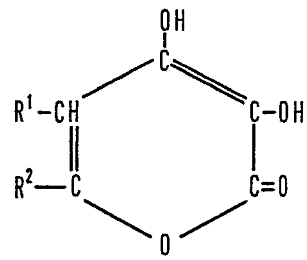 (II)

oder den entsprechenden Dihydropyrondiolen, wobei die Reste $R^1$ und $R^2$ gleich oder verschieden sein können und Wasserstoffatome, Alkyl-, Cycloalkyl-, Aryl-, Carbonyl-, Carboxyl-, Carboxyalkyl- oder Nitrilgruppen sein können.

Als besonders geeignet haben sich die Ascorbinsäure und ihre Derivate erwiesen.

Herstellung und Eigenschaften dieser Verbindungen werden in dem Lehrbuch H.V. Euler, B. Eistert, Reduktone und Reduktonate, Enke-Verlag, Stuttgart, (1957) ausführlich beschrieben. Der Einsatz von Ascorbinsäure als Bestandteil einer Stabilisatorkombination in Polyvinylchlorid ist in der EP–A–51 788 beschrieben.

Die Stabilisierungsmittel werden in solchen Mengen eingesetzt, daß die organischen Polyphenylenoxidlösung auch bei Temperaturen bis zu 200°C über mehrere Tage stabil bleibt, d.h. kein Molekulargewichtsabbau und sonstige strukturellen Veränderungen erleidet. In der Regel werden hierfür 0,1 bis 100 mMol, bezogen auf das bei der oxidativen Kupplung eingesetzte Phenol, benötigt, besonders bevorzugt werden 1 bis 10 mMol, bezogen auf 1 Mol monomeres Phenol, verwendet.

Die Zugabe der Stabilisierungsmittel ist unkritisch. Sie kann direkt mit oder nach der Zugabe der komplex- und/oder salzbildenden Extraktionsmittel erfolgen, so daß kein gesonderter Verfahrensschritt für die anschlieende Abtrennung der wärigen Phase erforderlich ist. Die Zugabe der Stabilisierungsmittel kann aber auch in einem gesonderten Verfahrensschritt erfolgen. In der Regel wird das Stabilisierungsmittel in Form von 1 gew.%igen bis gesättigten wärigen Lösungen, der organischen Polyphenylenetherlösung zugesetzt. Das Stabiliserungsmittel kann aber auch in reiner Form zugesetzt werden, insbesondere dann, wenn der Stabilisierungsschritt direkt nach dem Extraktionsschritt der Metallkomponente des Katalysatorkomplexes erfolgt.

Die Kontaktzeit des Stabilisierumgsmittels mit der weitgehend katalysatorfreien organischen Polyphenylenetherlösung kann innerhalb weiter Grenzen variieren. Bevorzugt werden Reaktionszeiten von 1 Minute bis 2 Stunden. Häufig reichen jedoch Reaktionszeiten von 3 bis 60 Minuten aus. Die Umsetzung erfolgt in der Regel im Temperaturbereich von 20 bis 120°0, besonders bevorzugt wird jedoch bei Temperaturen von 50 bis 80°C gearbeitet. Es sind jedoch auch Temperaturbereiche darunter und darüber anwendbar.

Nach der Entfernung der metallischen Komponente als Komplex und/oder Salz und der Stabilisierung der Polyphenylenetherlösung kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z. B. der Polyphenylenether durch Ausfällen aus einer Reaktionslösung mittels einem Antilösungsmittel, wie beispielsweise einem Überschuß von einem Alkohol, d.h. Methanol, isoliert werden. Das filtrierte Produkt kann in Alkohol aufgeschlämmt und - falls gewünscht -mit einem Entfärbungsmittel gerührt werden und dann wird der Polyphenylenether abfiltriert und nach herkömmlichen Verfahren in Filme, Fasern, ausgeformte Gegenstände und dgl. umgewandelt. Andere Alkohole wie Isopropanol, Propanol oder Ethanol sind in gleicher Weise verwendbar.

Wie bereits erwähnt, ist ein bevorzugter Aspekt des vorliegenden Verfahrens die Herstellung von thermostabilen Polyphenylenetherlösungen mit niedrigem Metallgehalt, aus denen die polymeren Stoffe nach sog. Totalisolationsverfahren, z. B. durch Sprühtrocknung, Dampfausfällung und Heißwasserzerkrümelung, gewonnen werden können. Dies erleichtert die wirtschaftliche Anwendung solcher Verfahren, die hinsichtlich der erforderlichen Energie, der Lösungsmittelverluste wirtschaftlicher sind als bekannten Ausfällungsverfahren. Grundbedingung für diese kostengünstigen weil energiesparenden Aufarbeitungsverfahren ist es jedoch, daß die organischen Polyphenylen-etherlösungen bis zu Temperaturen von 200°C auch über längere Zeiträume stabil sind.

Die mit der Erfindung erzielten Vorteile bestehen insbesondere darin, daß es mit Hilfe der erfindungsgemäßen Stabilisierungsmittel gelingt, bis zu 200°C thermostabile Polyphenylenetherlösungen zu erzeugen. Gegenüber dem Stand der Technik insbesondere gegenüber den DE–A–23 30 130 und 27 54 887 ist als weiterer Vorteil festzuhalten, daß die erfindungsgemäßen Stabilisierungsmittel für sich alleine voll wirksam sind, während bisher Kombinationen aus Reduktionsmitteln und zweiwertigen Phenolen eingesetzt werden mußten ohne daß eine Thermostabilität bis 200°C erzielt werden konnte. Darüber hinaus führen die Stabiliserungsmittel zu sehr hell gefärbten Polyphenylen-etherlösungen und formmassen. Schlielich ist ein weiterer wesentlicher verfahrenstechnischer Vorteil bei der Verwendung der Stabilisierungsmittel insbesondere gegenüber dem Stand der Technik der DE-A- 27 54 887 festzustellen: während bei der Anwendung der Kombination aus Reduktionsmittel und zweiwertigem Phenol Probleme bei der Phasentrennung von organischer polyphenylenetherhaltiger und wäriger metallextraktionsmittel- und stabilisierungsmittelhaltiger Phase auftreten, sind diese bei den erfindungsgemäen Stabilisierungsmitteln wesentlich weniger ausgeprägt - die Phasentrennung erfolgt innerhalb weniger Minuten bei klarer Phasentrennschicht.

Die folgenden Beispiele dienen dazu, die Erfindung zu illustrieren. Die angegebenen Teile sind Gewichtsteile, es sei denn, es ist anders angegeben.

Die Intrinsikviskosität wird durch Messung an 0,5 %igen Lösungen in Chloroform bei 30°C bestimmt.

**Beispiel 1**

Herstellung von Poly-(2,6-dimethyl-1,4-phenylen)-ether

Eine Vorlage von 1,3 g Cu-1-Bromid und 20 g 1,4-Dimethylpentylamin und 2 g 2,6-Dimethylphenol (=DMP) wird bei 20°C 5 Minuten unter Einleiten von Sauerstoff gerührt, und dann wird im Verlauf von 30 Minuten eine Lösung von 204 g DMP in 1400 ml Toluol eindosiert. Anschlieend wird noch 1 Stunde bei 20°C gerührt. Die Reaktion wird in Gegenwart von 30 Liter Sauerstoff pro Stunde durchgeführt.

Reinigung der Reaktionslösung

Nach Beendigung der Reaktion wird die Polymerlösung mit 20 ml einer 10 %igen wärigen Lösung eines Copolymerisats, bestehend aus 72 Teilen Acrylsäure und 28 Teilen Maleinsäureanhydrid, einem K-Wert von 30, gemessen in 1 %igen Lösungen in Dimethylformamid entsprechend DIN 53 726, versetzt und während 10 Minuten heftig bei 60°C gerührt. Anschlieend werden die organische und die wärige Phase nach einer vollständigen Phasentrennung getrennt.

Stabilisierung der Reaktionslösung

Die toluolische Polyphenylenetherlösung wird mit 15 ml einer 10 %igen wärigen Ascorbinsäurelösung während 8 Minuten heftig bei 70°C gerührt. Anschlieend werden die organische und die wärige Phase nach einer vollständigen Phasentrennung getrennt.

**Beispiel 2**

Herstellung des Poly-(2,6-dimethyl-1,4-phenylen)-ethers

Eine Lösung von 1,2 g Cu-II-chlorid, 1,9 g Natriumbromid und 0,3 g Methyltrioctylammoniumchlorid in 15 ml Methanol werden zu 1100 ml Ethylbenzol hinzugegeben und bei 40°C gerührt. Anschlieend gibt man 14 g Di-n-butylamin und eine Lösung von 275 g 2,6-Dimethylphenol in 400 ml Ethylbenzol hinzu und begast die Reaktionslösung mit 0,1 $m^3$ Sauerstoff pro Stunde während 90 Minuten. Danach wird die Sauerstoffzufuhr abgedreht und das Reaktionsgefäß mit Stickstoff gespült.

Reinigung und Stabilisierung der Reaktionslösung

Nach Beendigung der Reaktion wird die Polymerlösung mit 32 ml einer 5 %igen wäßrigen Lösung einer Polyacrylsäure, K-Wert 20, gemessen 1 %ig in Dimethylformamid, bei 60°C während 10' heftig gerührt und anschließend 0,3 g Ascorbinsäure hinzugegeben und nochmals 10' bei 75°C heftig gerührt. Anschließend werden die organische und die wäßrige Phase nach einer vollständigen Phasentrennung getrennt.

**Beispiel 3**

Herstellung des Poly-(2,6-dimethyl-1,4-phenylen)-ethers und die Katalysatorabtrennung erfolgten wie in Beispiel 1 beschrieben. Die Stabilisierung wurde ebenfalls direkt nach der Katalysatorextraktion durch Zugabe von 25 ml einer 10 %igen Ascorbinsäure-Lösung während 5 min bei 75°C unter heftigem Rühren vorgenommen. Organische und wäßrige Phase wurden wie beschrieben getrennt.

**Beispiel 4**

Die Herstellung des Polyphenylenoxids erfolgte wie in Beispiel 1 beschrieben. Zur Reinigung der

Polymerlösung wurden 8,0 g Ethylendiamintetraessigsäure (vgl. Beispiel 1 DE-A- 23 64 319) hinzugegeben und die Polymerlösung eine Stunde bei 40°C gerührt. Die Stabilisierung erfolgte wie in Beispiel 3 beschrieben.

**Vergleichsbeispiel A**

Die Herstellung des Polyphenylenethers erfolgte wie in Beispiel 1 beschrieben. Zur Reinigung der Polymerlösung wurde wie in Beispiel 1 der DE-OS 26 16 746 verfahren, d.h., es werden 3,53 g Tetranatriumsalz der Ethylendiamintetraessigsäure und 2,73 g Natriumdithionit in 212 g Wasser gelöst, hinzugesetzt und bei 40°C kräftig gerührt. Die organische und wäßrige Phase wurde nach der vollständigen Phasentrennung getrennt.

**Vergleichsbeispiel B**

Die Herstellung des Polyphenylenethers erfolgte wie in Beispiel 1 beschrieben. Zur Katalysatorabtrennung und Stabilisierung der Polyphenylenetherlösung wurde wie in Beispiel 1 der DE-OS 27 54 887 verfahren. Die toluolische Polyphenylenetherlösung wurde hierzu mit 15,5 g einer 28 %igen wäßrigen Lösung des Trinatriumsalzes der Ethylendiamintetraessigsäure 10 Minuten lang bei 40°C heftig verrührt und anschließend mit 0,66 g Hydrochinon und 2 g Natriumsulfit versetzt und 10 Minuten heftig gerührt. Die organische und wäßrige Phase wurden nach der vollständigen Phasentrennung getrennt.

**Prüfungen**

Zunächst wurde die Zeit nach Zugabe des Stabilisierungsmittels bis zur vollständigen Phasentrennung von organischer und wäriger Phase bestimmt. Sie ist ebenso in der Tabelle 1 festgehalten wie die Grenzviskosität des Polyphenylenethers vor und nach der Temperung der toluolischen Lösungen der Polyphenylenether bei 150°C unter Stickstoffatmosphäre über einen Zeitraum von 48 Stunden. Der Polyphenylenether mute hierzu aus der organischen Phase durch Zugabe von Methanol ausgefällt und anschlieend getrocknet werden. Ein Vergleich der Beispiele in Tabelle 1 dokumentiert die Vorteile des erfindungsgemäen Verfahrens.

**Tabelle 1**

| Beispiel | Zeit bis zur vollständigen Phasentrennung | Rest-Kupfer-Gehalt (ppm) | Grenzviskosität vor Temperung 48 h | (dl/g) nach 150°C |
|---|---|---|---|---|
| 1 | 3 | 8 | 0,8 | 0,8 |
| 2 | 6 | 4 | 0,6 | 0,6 |
| 3 | 5 | 5 | 0,6 | 0,6 |
| 4 | 5 | 6 | 0,8 | 0,8 |
| Vergleichsbeispiel (nichterfindungsgemäß) | | | | |
| A | 18 | 12 | 0,8 | 0,4 |
| B | 21 | 14 | 0,8 | 0,6 |

**Patentansprüche**

1. Verfahren zur Herstellung hochmolekularer Polyphenylenether aus einwertigen Phenolen, die in den beiden ortho-Stellungen und gegebenenfalls in meta-Position, nicht aber in der para-Stellumg Alkylsubstituenten aufweisen, durch oxidative Kupplungsreaktion mit Sauerstoff bei Temperaturen zwischen 15 umd 50°C in Anwesenheit eines Katalysatorkomplexes aus einem Kupfersalz und einem organischen Amin in Gegenwart eines Lösungsmittels im Bereich von 1: 1 bis 20: 1 Gewichtsteilen, bezogen auf das monomere Phenol, und gegebenenfalls eines Aktivators und anschließendes Abstoppen der Reaktion und Description
fernen der Metallkomponente des Katalysators durch Zugabe chelat- und/oder salzbildender Mittel, dadurch gekennzeichnet daß die Polymerlösung zusätzlich mit Verbindungen der allgemeinen Struktur (1)

Tetrondiole 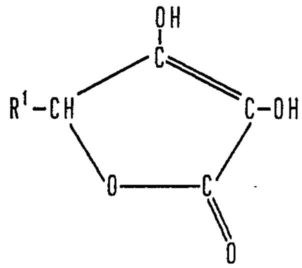 (I)

oder (II)

Pyrondiole 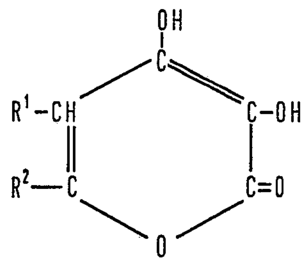 (II)

oder den entsprechenden Dihydropyrondiolen, wobei die Reste $R^1$ und $R^2$ gleich oder verschieden sein können und Wasserstoffatome, Alkyl-, Cycloalkyl-, Aryl-, Carbonyl-, Carboxyl-, Carboxyalkyl- oder Nitrilgruppen darstellen können, behandelt wird.

2. Verfahren gemäß Anspruch 1, dadurch gekennzeichnet, daß die Polymerlösung mit Ascorbinsäure und/oder ihren Derivaten behandelt wird.

3. Verfahren gemä Anspruch 1, dadurch gekennzeichnet, daß die Verbindungen der allgemeinen Struktur (I) oder in Mengen von 0,1 bis 100 mMol, bezogen auf 1 Mol monomeres Phenol, eingesetzt werden.

4. Verfahren gemä Anspruch 1, dadurch gekennzeichnet, daß die Verbindungen der allgemeinen Struktur (I) oder in Form von 1 bis 20 gew.%igen wärigen Lösungen eingesetzt werden.

## Claims

1. A process for the preparation of a high molecular weight polyphenylene ether from a monohydric phenol which carries alkyl substituents in the two ortho-positions and possibly in the meta-position but not in the para-position, by an oxidative coupling reaction with oxygen at from 15 to 50°C in the presence of a catalyst complex of a copper salt and an organic amine in the presence of a solvent in a weight ratio of from 1:1 to 20:1, based on the monomeric phenol, and in the presence or absence of an activator, and subsequent stopping of the reaction and removal of the metal component of the catalyst by the addition of chelating and/or salt-forming agents, wherein the polymer solution is additionally treated with compounds of the general structure (I)

tetronediols 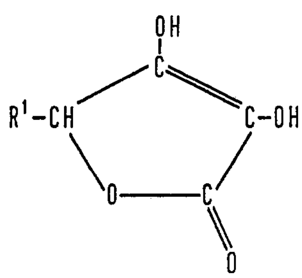 (I)

or (II)

pyronediols 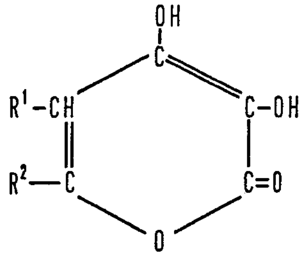 (II)

where $R^1$ and $R^2$ can be identical or different and each is hydrogen, alkyl, cycloalkyl, aryl, carbonyl, carboxyl, carboxyalkyl or nitrile, or the corresponding dihydropyronediols.

2. A process as claimed in claim 1, wherein the polymer solution is treated with ascorbic acid and/or a derivative thereof.

3. A process as claimed in claim 1, wherein the compounds of the general structure (I) or (II) are used in an amount of from 0.1 to 100 mmoles per mole of monomeric phenol.

4. A process as claimed in claim 1, wherein the compounds of the general structure (I) or (II) are used in the form of 1 to 20% strength by weight aqueous solutions.

**Revendications**

1. Procédé de préparation de poly(éthers de phénylène) de poids moléculaire élevé à partir de phénols monovalents, qui portent des substituants alkyle sur les deux positions ortho et éventuellement en position méta, mais non en position para, par une réaction de copulation oxydante avec l'oxygène à des températures de 13 à 50°C, en présence d'un complexe catalytique d'un sel de cuivre et d'une amine organique et en présence d'un solvant dans une proportion (parties en poids) de 1: 1 à 20: 1 par rapport au phénol monomère et éventuellement d'un agent activant, suivie de l'arr$52t de la réaction et de l'élimination du composant métallique du catalyseur par l'addition d'une substance chélatante et(ou) salifiante, caractérisé en ce que la solution du polymère est en outre traitée avec des substances de la structure générale (I)

tétrone-diols

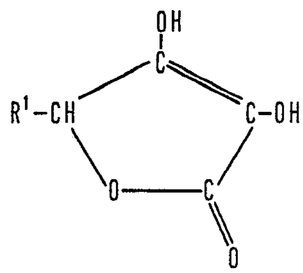

(I)

ou de la structure générale (II)

pyrone-diols

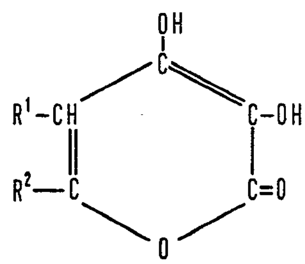

(II)

ou avec des dihydropyrone-diols correspondants, les substituants $R^1$ et $R^2$, qui peuvent être identiques ou différents, désignant chacun un atome d'hydrogène ou un groupe alkyle, cycloalkyle, aryle, carbonyle, carboxyle, carboxyalkyle ou nitrile.

2. Procédé suivant la revendication 1, caractérisé en ce que la solution du polymère est traitée avec l'acide ascorbique et(ou) des dérivés de celui-ci.

3. Procédé suivant la revendication 1, caractérisé en ce que les composés de la structure générale (I) ou (II) sont mis en oeuvre à raison de 0,1 à 100 millimoles par mole de phénol monomère.

4. Procédé suivant la revendication 1, caractérisé en ce que les composés de la structure générale (I) ou (II) sont mis en oeuvre sous forme de solutions aqueuses d'une concentration de 1 à 20 % en poids.